# EUROPÄISCHE PATENTSCHRIFT

(11) **EP 3 141 707 B1**
(45) Veröffentlichungstag und Bekanntmachung des Hinweises auf die Patenterteilung: **28.11.2018**
(21) Anmeldenummer: 16188101.6
(22) Anmeldetag: 09.09.2016
(51) Int. Cl.: F01D 25/16, F01D 25/24, F16C 35/02

(54) **LAGERGEHÄUSE UND ENTSPRECHENDES MONTAGEVERFAHREN**
BEARING HOUSING AND CORRESPONDING ASSEMBLY METHOD
LOGEMENT DE PALIER ET PROCÉDÉ DE MONTAGE CORRESPONDANT

(30) Priorität: 11.09.2015 DE 102015217443
(43) Veröffentlichungstag der Anmeldung: 15.03.2017
(73) Patentinhaber: BMTS Technology GmbH & Co. KG, 70376 Stuttgart (DE)
(72) Erfinder: AMMON, Volkhard, 72124 Pliezhausen (DE)
(74) Vertreter: BRP Renaud & Partner mbB Rechtsanwälte Patentanwälte Steuerberater

(56) Entgegenhaltungen:
- WO-A1-2015/130474
- DE-A1-102009 058 068
- DE-A1-102010 025 575
- DE-T5-112011 102 808
- DE-U1-202008 014 925

## Beschreibung

Die vorliegende Erfindung betrifft ein Lagergehäuse mit einem Gehäusedeckel gemäß dem Oberbegriff des Anspruchs 1. Die Erfindung betrifft außerdem einen Abgasturbolader mit einem solchen Lagergehäuse sowie ein Verfahren zur Montage eines Gehäusedeckels in einem solchen Lagergehäuse.

Aus der DE 10 2011 075 517 A1 ist ein Lagergehäuse einer Ladeeinrichtung, insbesondere eines Abgasturboladers eines Kraftfahrzeuges, bekannt, mit einem aus Metall ausgebildeten Lagergehäusedeckel. An diesem ist nun ein erstes Gewinde und am Lagergehäuse ein komplementär dazu ausgebildetes zweites Gewinde vorgesehen, so dass der Lagergehäusedeckel am Lagergehäuse durch eine Drehbewegung anschraub- und fixierbar ist. Hierdurch soll insbesondere die Teilevielfalt reduziert werden können.

Aus der DE 10 2009 058 068 A1 ist ebenfalls ein Lagergehäuse einer Ladeeinrichtung mit einem Lagergehäusedeckel bekannt, über welchen ein Axiallager für eine Welle in Axialrichtung fixiert ist. Dabei weist das Lagergehäuse eine hinterschnittartige Ringnut auf, wobei zusätzlich ein tellerfederartiges Sicherungselement vorgesehen ist, das den Lagergehäusedeckel gegen das Axiallager und/oder gegen das Lagergehäuse vorspannt, indem es mit einem Außenrand in die lagergehäuseseitige Ringnut eingreift und sich mit einem Innenrand am Lagergehäusedeckel abstützt. Hierdurch soll insbesondere eine konstruktive Vereinfachung erzielt werden können.

Aus der EP 0 599 520 B1 ist ein Axiallager eines Turboladers für eine Rotorwelle mit einem Hauptkörperteil bekannt, das eine Bohrung hat, die so ausgebildet ist, dass sie ein Nabenteil eines Druckringes eines Turboladers aufnehmen kann. Generell sind aus dem Stand der Technik vielerlei Lagergehäuse und Abgasturbolader bekannt, bei welchen ein Gehäusedeckel auf unterschiedlichste Art und Weise am Lagergehäuse befestigt wird. Bekannt sind hierbei insbesondere der Einsatz von Schrauben, Sicherungsringen oder Bajonettverschlüssen, welche zugleich eine einfache und dauerhafte Fixierung des Gehäusedeckels am Lagergehäuse gewährleisten sollen.

Die vorliegende Erfindung beschäftigt sich mit dem Problem, für ein Lagergehäuse der gattungsgemäßen Art eine verbesserte oder zumindest eine alternative Ausführungsform anzugeben, die sich insbesondere durch eine Befestigung eines Gehäusedeckels an einem Lagergehäuse ohne zusätzliche Befestigungsmittel, wie beispielsweise Schrauben oder ähnliches, auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen Gehäusedeckel eines Lagergehäuses einer Ladeeinrichtung, beispielsweise eines Abgasturboladers, mit zumindest einem Umformabschnitt auszustatten und als Gegenstück in einem Lagergehäuse einer Ladeeinrichtung, beispielsweise eines Abgasturboladers, eine entsprechende Hinterschnittkontur einzubringen, in welcher der Umformabschnitt eingreifen und dadurch den Gehäusedeckel am Lagergehäuse fixieren kann. Das Lagergehäuse besitzt hierzu eine umlaufende und nach innen offene Nut, die die Hinterschnittkontur darstellt. Der Gehäusedeckel besitzt den zumindest einen Umformabschnitt, der wahlweise kreissegmentartig, das heißt über einen Umfang unterbrochen ausgebildet sein kann, oder aber vollumfänglich um den Umfang läuft. Erfindungsgemäß ist nun der zumindest eine Umformabschnitt plastisch in die Nut des Lagergehäuses umgeformt bzw. eingedrückt und fixiert darüber den Gehäusedeckel am Lagergehäuse. Der große Vorteil der Erfindung ist dabei, dass zusätzliche Befestigungsmittel, wie beispielsweise Schrauben oder Spannstifte, komplett entfallen können, wodurch sich die Teilevielfalt und verbunden damit auch die Lager- und Logistikkosten reduzieren. Zugleich kann durch den zumindest einen Umformabschnitt und die zugehörige Nut eine unlösbare Verbindung des Gehäusedeckels am Lagergehäuse geschaffen werden, wodurch nachträgliche und unerwünschte Manipulationen zumindest erschwert werden. Durch eine entsprechende symmetrische Anordnung mehrerer Umformabschnitte kann darüber hinaus eine symmetrische Krafteinleitung erreicht und dadurch ein unerwünschtes Verziehen des Gehäusedeckels vermieden werden. Von besonderem Vorteil sind auch die äußerste kurzen Montagezeiten des Gehäusedeckels am Lagergehäuse.

Bei einer vorteilhaften Weiterbildung der erfindungsgemäßen Lösung ist die Nut derart ausgebildet, dass sie bei einem Umformen des Umformabschnittes in die Nut eine Axialkraft auf den Umformabschnitt und damit auf den Gehäusedeckel ausübt. Hierdurch kann eine Federvorspannung des Gehäusedeckels im Lagergehäuse erreicht werden, wodurch langfristig beispielsweise ein Klappern oder ein ungewolltes sich Lösen des Gehäusedeckels vermieden werden kann.

Zweckmäßig weist die Nut einen dreiecksförmigen, einen ovalen, einen rechteckförmigen oder einen halbkreisförmigen Querschnitt auf. Besonders ein dreieckförmiger Querschnitt ermöglicht dabei den zuvor genannten Effekt, wonach eine Nutwand und damit die Nut beim Umformen des Umformabschnittes in die Nut eine Axialkraft auf den Umformabschnitt und damit auf den Gehäusedeckel ausübt.

Bei einer weiteren vorteilhaften Ausführungsform der erfindungsgemäßen Lösung sind zumindest zwei als Schnapphaken ausgebildete Umformabschnitte vorgesehen und der Gehäusedeckel ist mit einer Presspassung in dem Lagergehäuse verpresst. Bei einer derartigen Ausbildungsform sind die Umformabschnitte des Gehäusedeckels bereits vor der Montage desselben am Lagergehäuse umgeformt, wodurch die Montage des Gehäusedeckels nochmals vereinfacht wird.

Bei einer alternativen Ausführungsform der erfindungsgemäßen Lösung ist der Umformabschnitt durch Rollieren, durch Taumelnieten oder durch Magnetpulsumformen in die Nut umgeformt. Bei einem derartigen Herstellen des Formschlusses zwischen dem zumindest einen Umformabschnitt und der Nut im Lagergehäuse erfolgt somit das Fixieren der Umformabschnitte in der Nut erst nach der Montage des Gehäusedeckels am Lagergehäuse.

Die vorliegende Erfindung beruht weiter auf dem allgemeinen Gedanken, ein Verfahren zur Montage eines Gehäusedeckels in einem Lagergehäuse anzugeben, bei welchem zunächst eine mit einem Kondensator verbundene Spule um das Lagergehäuse gelegt wird. Anschließend wird die Spule mit einer vom Kondensator schlagartig aufgebrachten Spannung von größer als 7 kV beaufschlagt, wodurch im Lagergehäusedeckel Wirbelströme entstehen, die eine stoßartige, sehr hohe Lorentzkraft erzeugen. Letztere formt den zumindest einen Umformabschnitt des Gehäusedeckels radial um und drückt gleichzeitig den Gehäusedeckel axial in Richtung des Axiallagers bzw. in das Lagergehäuse hinein. Ein derartiges Verfahren stellt ein zuverlässiges und prozesssicheres Montieren des Gehäusedeckels am Lagergehäuse dar.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch ein erfindungsgemäßes Lagergehäuse,
- Fig. 2: eine Detaildarstellung aus Fig. 1 im Bereich eines Umformabschnitts eines Gehäusedeckels,
- Fig. 3: eine Ansicht auf einen Gehäusedeckel mit Schlitzen.

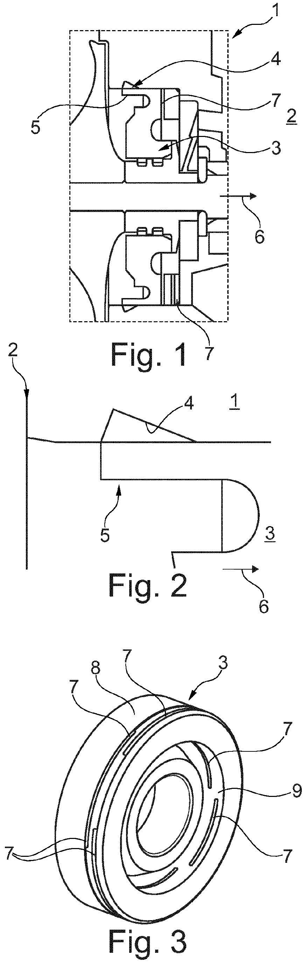

Entsprechend der Fig. 1, weist ein erfindungsgemäßes Lagergehäuse 1 eines Abgasturboladers 2 einen Gehäusedeckel 3 auf. In dem Lagergehäuse 1 ist dabei eine umlaufende und nach innen offene Nut 4 vorgesehen, die verallgemeinernd auch als Hinterschnittkontur bezeichnet werden kann. Der Gehäusedeckel 3 besitzt zumindest einen Umformabschnitt 5, der sich komplett umlaufend um den Umfang des Gehäusedeckels 3 erstrecken oder aber in Umfangsrichtung unterbrochen und dadurch kreissegmentartig ausgebildet sein kann. Der zumindest eine Umformabschnitt 5 ist dabei plastisch in die Nut 4, das heißt in die Hinterschnittkontur, des Lagergehäuses 3 umgeformt und fixiert darüber den Gehäusedeckel 3 am Lagergehäuse 1. Der große Vorteil einer derartigen Fixierung des Gehäusedeckels 3 am Lagergehäuse 1 liegt darin, dass keine zusätzlichen Befestigungsmittel, wie beispielsweise Sicherungsringe, Schrauben oder aufwändige Verschlüsse, wie beispielsweise ein Bajonettverschluss, benötigt werden.

Die Nut 4 ist dabei vorzugsweise derart ausgebildet, dass sie bei einem Umformen des Umformabschnittes 5 in die Nut 4 eine Axialkraft in Axialrichtung 6 auf den Umformabschnitt 5 und damit auf den Gehäusedeckel 3 ausübt bzw. auswirkt. Betrachtet man die Nut 4 gemäß den Fig. 1 und 2, so kann man erkennen, dass diese einen dreiecksförmigen Querschnitt aufweist, wobei selbstverständlich alternativ auch ein ovaler, ein rechteckförmiger oder ein halbkreisförmiger Querschnitt denkbar wäre. Üblicherweise ist die Nut 4 derart angeschrägt, dass bei der Umformung des Gehäusedeckels 3 bzw. dessen Umformabschnitte 5 die zuvor erwähnte Axialkraft entsteht. Durch Vorsehen mehrerer Umformabschnitte 5 kann die Steifigkeit des Gehäusedeckels 3 verringert werden, so dass durch die hieraus entstehende Federwirkung Axialtoleranzen kompensiert werden können. Kontaktflächen zwischen dem Gehäusedeckel 3 einerseits und der Nut 4 andererseits im Lagergehäuse 1 sind dabei vorzugsweise derart ausgebildet, dass sie eine Dichtfläche bilden, wozu sie eine vordefinierte Ebenheit bzw. Rauhigkeit aufweisen. Von besonderem Vorteil ist hierbei, sofern der Umformabschnitt 5 formschlüssig in der Nut 4 anliegt. Um eine Kerbwirkung reduzieren zu können, kann die Nut 4 auch abgerundete Ecken aufweisen.

Generell können die Umformabschnitte 5 am Gehäusedeckel 3 bereits vor der Montage desselben am Lagergehäuse 1 umgeformt werden oder aber erst nach der Montage. Bei einer vorherigen Umformung können beispielsweise zumindest zwei als Schnapphaken ausgebildete Umformabschnitte 5 vorgesehen sein und der Gehäusedeckel 3 mit einer Presspassung in dem Lagergehäuse 1 verpresst werden. In diesem Fall stellt der Presssitz die erforderliche Dichtfunktion dar.

Werden die Umformabschnitte 5 erst nach der Montage des Gehäusedeckels 3 im Lagergehäuse 1 umgeformt, so kann dies beispielsweise durch Rollieren, durch Taumelnieten, durch eine hydraulische Membran oder durch Magnetpulsumformen erfolgen. Besonders das Magnetpulsumformen stellt dabei eine nahezu verschleißfreie Umformmethode dar, in welcher kein zusätzliches Werkzeug erforderlich ist. Das Magnetpulsumformen erfolgt dabei beispielsweise wie folgt: Zunächst wird eine mit einem Kondensator verbundene Spule um das Lagergehäuse 1 gelegt und anschließend die Spule mit einer vom Kondensator schlagartig aufgebrachten Spannung von größer als 7.000 V beaufschlagt. Diese schlagartige Entladung erzeugt eine stoßartige und sehr hohe Lorentzkraft, welche die Umformabschnitte des Gehäusedeckels 3 radial umformt und zugleich den Gehäusedeckel 3 in Axialrichtung 6 in das Lagergehäuse 1 in Richtung der Axiallager drückt.

Betrachtet man die Fig. 1 und 3, so kann man dort kreissegmentartige Schlitze 7 am Gehäusedeckel 3 erkennen. Dabei sind zumindest zwei dieser Schlitze 7 in Axialrichtung zueinander versetzt angeordnet und überlappen sich in Umfangsrichtung. Andere Schlitze 7 wiederum überlappen sich in Umfangsrichtung nicht. Durch diese Schlitze 7 kann eine axiale Elastizität und damit eine Axialfederwirkung des Gehäusedeckels 3 erreicht werden, mittels welcher insbesondere auch ein Ausgleich von Axialtoleranzen möglich ist. Die Schlitze 7 durchdringen dabei den Gehäusedeckel 3 in Radialrichtung vollständig, so dass sie von einer Außenmantelfläche 8 bis zu einer Innenmantelfläche 9 durchgehen.

Mit dem erfindungsgemäßen Lagergehäuse 1 lassen sich dabei folgende wesentliche Vorteile erzielen:
- weitere Befestigungselemente, wie beispielsweise Schrauben oder Sicherungsringe entfallen,
- Dichtstellen unter den Schraubenköpfen entfallen ebenfalls,
- es entsteht eine dauerhafte und unlösbare Verbindung des Gehäusedeckels 3 im Lagergehäuse 1,
- eine O-Ringdichtung kann entfallen,
- es ist eine Werkstoffersparnis durch ein spanlos hergestelltes Rohteil (Guss-, Schmiede- oder Vliespressteil) möglich,
- durch eine symmetrische Krafteinleitung kann ein unerwünschter Verzug des Gehäusedeckels 3 vermieden werden,
- extrem kurze Montagezeiten durch den Umformvorgang.

## Patentansprüche

1. Lagergehäuse (1) eines Abgasturboladers (2) mit einem Gehäusedeckel (3), wobei in dem Lagergehäuse (1) eine umlaufende und nach innen offene Nut (4) angeordnet ist, **dadurch gekennzeichnet,**
- **dass** der Gehäusedeckel (3) zumindest einen Umformabschnitt (5) aufweist, der plastisch in die Nut (4) des Lagergehäuses (1) umgeformt und darüber der Gehäusedeckel (3) am Lagergehäuse (1) fixiert ist.

2. Lagergehäuse nach Anspruch 1,
**dadurch gekennzeichnet,**
**dass** die Nut (4) derart ausgebildet ist, dass sie bei einem Umformen des Umformabschnittes (5) in die Nut (4) eine Axialkraft auf den Umformabschnitt (5) und den Gehäusedeckel (3) ausübt.

3. Lagergehäuse nach Anspruch 1 oder 2,
**dadurch gekennzeichnet,**
- **dass** die Nut (4) einen dreieckförmigen, einen ovalen, eine rechteckförmigen oder einen halbkreisförmigen Querschnitt aufweist, und/oder
- **dass** die Nut (4) abgerundete Ecken aufweist.

4. Lagergehäuse nach einem der vorhergehenden Ansprüche,
**dadurch gekennzeichnet,**
**dass** zumindest zwei als Schnapphaken ausgebildete Umformabschnitte (5) vorgesehen sind und der Gehäusedeckel (3) mit einer Presspassung in dem Lagergehäuse (1) verpresst ist.

5. Lagergehäuse nach einem der Ansprüche 1 bis 3,
**dadurch gekennzeichnet,**
**dass** der zumindest eine Umformabschnitt (5) durch Rollieren, durch Taumelnieten oder durch Magnetpulsumformen in die Nut (4) umgeformt ist.

6. Lagergehäuse nach einem der vorherigen Ansprüche,
**dadurch gekennzeichnet,**
**dass** der Gehäusedeckel (3) formschlüssig im Lagergehäuse (1) aufgenommen ist.

7. Lagergehäuse nach einem der vorherigen Ansprüche,
**dadurch gekennzeichnet,**
**dass** der Gehäusedeckel (3) kreissegmentartige Schlitze (7) aufweist.

8. Lagergehäuse nach Anspruch 7,
**dadurch gekennzeichnet,**
**dass** zumindest zwei kreissegmentartige Schlitze (7) in Axialrichtung zueinander versetzt angeordnet sind und sich in Umfangsrichtung überlappen.

9. Abgasturbolader (2) mit einem Lagergehäuse (1) nach einem der vorherigen Ansprüche.

10. Verfahren zur Montage eines Gehäusedeckels (3) in einem Lagergehäuse (1) nach einem der Ansprüche 1 bis 4 und 6 bis 8, wobei Ansprüche 6 bis 8 nicht nach Anspruch 5 definiert sind, bei dem
- eine mit einem Kondensator verbundene Spule um das Lagergehäuse (1) gelegt wird,
- die Spule mit einer von einem Kondensator schlagartig aufgebrachten Spannung von größer als 7.000 V beaufschlagt wird,
- der Gehäusedeckel (3) durch die von der Spule erzeugte Lorentzkraft in Axialrichtung (6) in seine Endposition verstellt und der zumindest eine Umformabschnitt (5) in die Nut (4) umgeformt wird.

## Claims

1. Bearing housing (1) of an exhaust gas turbocharger (2) with a housing cover (3), wherein in the bearing housing (1) a circumferential and inwardly open groove (4) is disposed, **characterised in that** the housing cover (3) has at least one forming section (5), which is plastically deformed into the groove (4) of the bearing housing (1) and is fixed above the housing cover (3) on the bearing housing (1).

2. Bearing housing according to claim 1, **characterised in that** the groove (4) is designed such that when forming the forming section (5) into the groove (4) it exerts an axial force on the forming section (5) and on the housing cover (3).

3. Bearing housing according to claim 1 or 2, **characterised in that** the groove (4) has a triangular, an oval, a rectangular or a semi-circular cross-section, and / or that the groove (4) has rounded corners.

4. Bearing housing according to one of the preceding claims, **characterised in that** at least two forming sections (5) formed as snap hook are provided and the housing cover (3) is pressed with a press fit in the bearing housing (1).

5. Bearing housing according to one of claims 1 to 3, **characterised in that** the at least one forming section (5) is formed by rolling, by tumbling rivets or by magnetic pulse forming in the groove (4).

6. Bearing housing according to one of the preceding claims, **characterised in that** the housing cover (3) is received in a form-fitting manner in the bearing housing (1).

7. Bearing housing according to one of the preceding claims, **characterised in that** the housing cover (3) has circular-segment-like slots (7).

8. Bearing housing according to claim 7, **characterised in that** at least two circular segment-like slots (7) are disposed offset from each other in the axial direction and overlap in the circumferential direction.

9. Exhaust gas turbocharger (2) with a bearing housing (1) according to one of the preceding claims.

10. Method for mounting a housing cover (3) in bearing housing (1) according to one of claims 1 to 4 and 6 to 8, wherein claims 6 to 8 are not defined according to claim 5, in which a coil connected to a capacitor is mounted around the bearing housing (1), the coil being acted upon by a capacitor to which voltage of greater than 7,000 V is suddenly applied, the housing cover (3) displaced to its final position by the Lorenz force generated by the coil in the axial direction (6) and the at least one forming section (5) is formed into the groove (4).

## Revendications

1. Logement de palier (1) d'un turbocompresseur à gaz d'échappement (2) avec un couvercle de logement (3), dans lequel est agencée dans le logement de palier (1) une rainure périphérique (4) ouverte vers l'intérieur, **caractérisé en ce que**
- le couvercle de logement (3) présente au moins une section de formage (5) qui présente une déformation plastique dans la rainure (4) du logement de palier (1) et, par-dessus, le couvercle de logement (3) est fixé sur le logement de palier (1).

2. Logement de palier selon la revendication 1,
**caractérisé en ce que**
la rainure (4) est conçue pour qu'elle exerce, lors d'une déformation de la section de formage (5) dans la rainure (4), une force axiale sur la section de formage (5) et le couvercle de logement (3).

3. Logement de palier selon la revendication 1 ou 2,
**caractérisé en ce que**
- la rainure (4) présente une section transversale triangulaire, ovale, rectangulaire ou semi-circulaire et/ou
- la rainure (4) présente des coins arrondis.

4. Logement de palier selon l'une quelconque des revendications précédentes,
**caractérisé en ce que**
il est prévu au moins deux sections de formage (5) conçues sous forme de crochets à déclic et le couvercle de logement (3) est pressé avec un ajustage serré dans le logement de palier (1).

5. Logement de palier selon l'une quelconque des revendications 1 à 3,
**caractérisé en ce que**
la au moins une section de formage (5) est déformée par galetage, rivetage par fluage radial ou déformation par impulsion magnétique dans la rainure (4).

6. Logement de palier selon l'une quelconque des revendications précédentes,
**caractérisé en ce que**
le couvercle de logement (3) est reçu avec adaptation de formes dans le logement de palier (1).

7. Logement de palier selon l'une quelconque des revendications précédentes,
**caractérisé en ce que**
le couvercle de logement (3) présente des fentes en segments de cercle (7).

8. Logement de palier selon la revendication 7,
**caractérisé en ce que**
au moins deux fentes en segments de cercle (7) sont agencées décalées l'une de l'autre dans la direction axiale.

9. Turbocompresseur à gaz d'échappement (2) équipé d'un logement de palier (1) selon l'une quelconque des revendications précédentes.

10. Procédé de montage d'un couvercle de logement (3) dans un logement de palier (1) selon l'une quelconque des revendications 1 à 4 et 6 à 8, dans lequel les revendications 6 à 8 ne sont pas définies selon la revendication 5, dans lequel
- une bobine liée à un condensateur est appliquée autour du logement de palier (1),
- la bobine est alimentée par une tension de plus de 7 000 V appliquée brutalement par un condensateur,
- le couvercle de logement (3) est déplacé dans sa position finale dans une direction axiale (6) par la force de Lorentz produite par la bobine et la au moins une section de formage (5) est déformée dans la rainure (4).
